# EUROPÄISCHE PATENTANMELDUNG

(11) **EP 1 207 069 A1**
(43) Veröffentlichungstag der Anmeldung: **22.05.2002**
(21) Anmeldenummer: 00811086.8
(22) Anmeldetag: 16.11.2000
(51) Int. Cl.: B60J 7/06

(54) **Vorrichtung zum Anheben der Wagenplanen mit verschiebbarer Planenabdeckung**

(71) Anmelder: AAE AG, 6301 Zug (CH)
(72) Erfinder: Nicolin, Johannes Werner, Dr.-Ing., 6330 Cham (CH); Hron, Petr, 6312 Steinhausen (CH)

(57) **Zusammenfassung**

Vorrichtung zum Anheben und Spreizen der Wagenplane bei Wagen mit verschiebbarer Planenabdeckung, bestehend aus fahrbaren Bögen (2) (Spriegeln) und Plane (1), die miteinander verbunden sind und unter der Plane zusätzlich flexiblen Stäbe aufweisen, die die Form der verschiebbaren Bögen (2) einnehmen, und einerseits an den fahrbaren Bögen (2) und an der Plane (1) befestigt und andererseits fliegend gestaltet und nur an der Plane (1) fixiert sind, wobei die flexiblen Stäbe (3) mit verschiedener Fixierung, je nach Bedarf angeordnet werden können.

## Beschreibung

### Technikbereich

Die Erfindung betrifft die Verkehrsbranche, besonders Eisenbahnwagen mit verschiebbaren Planenabdeckungen.

### Bisheriger Stand der Technik

Bisher bekannte Vorrichtungen zum Verschieben der Planenabdeckung sind im wesentlichen bei allen abgedeckten Eisenbahnwagen mit verschiebbarer Planenabdeckung ähnlich und haben sich in dieser Form auch bewährt.
Sie bestehen aus einem Planenverdeck, das wie üblich seine Form durch stützende und haltende Spriegel erhält. Zum Öffnen des Verdecks jedoch werden die Spriegel, die mit Rollen auf Schienen gelagert und so in Längsrichtung auf dem Wagen verfahrbar sind, zusammengeschoben.
Dieses System hat aber einen großen Nachteil durch die schlaff herabhängenden Planenteile zwischen den einzelnen Spriegeln der Planentragkonstruktion (Spriegel, verfahrbar auf Rollen) beim geöffneten Wagen, wenn die Abdeckung zu einer Wagenseite hin verschoben ist. Dieses Problem der herabhängenden "gefalteten" Plane stört vor allem beim Transport von voluminösen Ladungen und reduziert den Wagennutzwert durch starke Einschränkung des Ladevolumens erheblich.
Eine Standardausführung des Wagens mit verschiebbarer Planenabdeckung gibt es zum Beispiel bei den Wagen Rils, Rilns, Shims usw.. Alle weisen dieselben Probleme auf.
Es wurden schon vor einiger Zeit Systeme entwickelt und in Betrieb genommen, die sich bemühen, dieses Problem zu beseitigen. Aber deren mechanische Kompliziertheit, Mehrpreis, Mehrgewicht, erhöhte Wartungsansprüche und nicht zuletzt stark erhöhte Betätigungskräfte bzw. die zu geringe Wirksamkeit z.B. im Übergang von den Seiten in die Dachschrägen hinein, verhindern deren breite, allgemeine Anwendung.

### Basis der Erfindung

Die oben aufgeführten Nachteile werden durch eine Vorrichtung zum Anheben der Wagenplane mit verschiebbarer Planenabdeckung beseitigt, deren Grundidee in der Ausnutzung der für diese Anwendung positiven Eigenschaften von leichten, flexiblen Stäben liegt, z.B. von Laminatstäben und deren Anordnung an der Plane. Die flexiblen Stäbe sind unter der Plane so angeordnet, dass sie die Form der fahrbaren, die Plane unterstützenden Bögen kopieren. Die Anordnung ist zusätzlich so, dass der Kniehebeleffekt, im Gegensatz zu den bekannten Anhebemechanismen, in Verbindung mit den elastischen Eigenschaften des Stabmaterials, optimal ausgenutzt wird. Die Plane zwischen den verschiebbaren Spriegeln wird so nicht nur nach oben, wie bei den herkömmlichen Mechanismen, sondern auch schräg nach oben und in Querrichtung aus dem Ladequerschnitt herausgehalten und herausgedrückt.
Dabei sind zur Erzielung der vollen Wirksamkeit besonders im Übergansbereich Seite zu Dachschräge einige flexible Stäbe an den fahrbaren Bögen und an der Plane befestigt und andere flexible Stäbe fliegend, direkt nur an der Plane befestigt.
Eine sehr vorteilhafte Lösung ist so gestaltet, dass von jeder Seite des fahrbaren Bogens zu ihm her ein flexibler Stab befestigt ist und jeweils zwischen zwei flexiblen Stäben, die an benachbarten fahrbaren Bögen befestigt sind, ist ein flexibler Stab angeordnet, fliegend nur an der Plane fixiert, wobei die nach aussen wirkenden, stossenden Enden der flexiblen Stäbe, die nur mit der Plane verbunden sind, sich an derjenigen Stelle befinden, wo der gerade Teil des fahrbaren Bogens in Bogenradius übergeht.
Als Ergebnis ergibt sich fast völliges Anheben der normalerweise schlaffhängenden Plane und ein nach aussen Falten der Plane derart, dass das Innenprofil des Wagens praktisch die fahrbaren Bögen kopiert und völlig frei ist.

Mit der Lösung gemäß der Erfindung erreicht man eine Erhöhung des Wagennutzwertes und ein einfaches Beladen selbst mit voluminösen Ladungen ohne das die Ladung mit der Plane kollidiert und Ladung oder Plane beschädigt werden; die Lösung ist dabei einfach, weist geringe Kosten auf, ist auch in der Bedienung einfach und auch an vorhandenen Wagen nachrüstbar.

### Erläuterung der Abbildung auf der Zeichnung

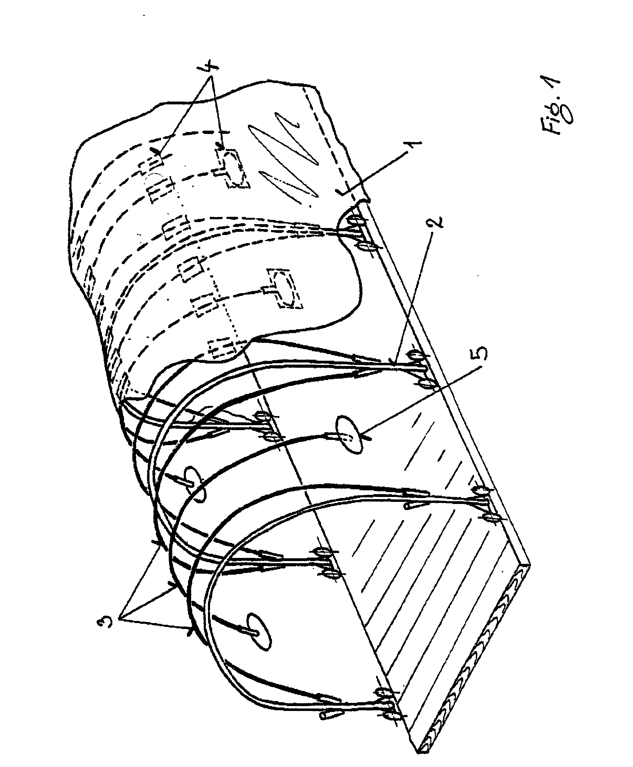

Auf Abbildung Nr. 1 ist die Vorrichtung zum Anheben der Wagenplane mit verschiebbarer Planenabdeckung schematisch beispielhaft dargestellt.

### Beispiel der Ausführung der Erfindung

Die Vorrichtung zum Anheben der Wagenplane mit verschiebbarer Planenabdeckung, die auf Abb. Nr. 1 dargestellt ist, besteht aus den fahrbaren Bögen /2/ (Spriegeln), an denen die Plane /1/ befestigt ist, wobei unter der Plane /1/ die flexiblen Stäbe /3/ so angeordnet sind, das sie die Form der verschiebbaren Bögen /2/, bzw. der im gechlossenen Zustand gegebenen Planen-Querschnittsform, annehmen. Es sind bei dieser Anordnung je zwei flexible Stäbe /3/ an einem fahrbaren Bogen /2/ (Spriegel), an jeder Seite je eine, fixiert und gleichzeitig an der Plane /1/ mit Hilfe von Verbindung /4/ befestigt und andererseits flexible Stäbe /3/ fliegend, nur an der Plane /1/ mit Hilfe von Verbindung /4/ fixiert, derart angeordnet, dass zusätzlich mindestens je ein "fliegend" angeordneter flexibler Stab /3/ zwischen den flexiblen Stäben /3/, die am fahrbaren Bogen /2/ (Spriegel) befestigt sind, in Querrichtung und schräg nach oben wirkt. Auch eine doppelte oder dreifache, in Längsrichtung z.B. parallel versetzte Anordnung der fliegenden Stäbe /3/ ist denkbar. Der oder die fliegend nur an der Plane /1/ befestigten flexiblen Stäbe /3/ sind auf den Enden mit Druckstücken /5/ ausgestattet. Die Verbindung /4/, mit der die fliegenden, flexiblen Stäbe /3/ nur an der Plane /1/ befestigt sind, sind mit ihren Enden in der Ebene angeordnet, wo der gerade, senkrechte Teil der fahrbaren Bögen /2/ in den Bogenradius übergeht. Auch eine höhere oder tiefere Anordnung dieser Druckstücke /5/ ist möglich.
Beim Öffnen der Planenabdeckung verschieben sich die fahrbaren Bögen /2/ (Spriegel), der Abstand zwischen den Bögen reduziert sich und sukzessive, durch den Druck auf die Druckstücke /5/ der Enden der flexiblen Stäbe /3/ an den Spriegeln wird auch die Plane /1/ verschoben, wobei durch die flexiblen Stäbe /3/ beim Verschieben der Planenabdeckung gleichzeitig die Plane /1/ angehoben wird und durch die fliegend angeordneten Stäbe /3/ die Plane schräg nach oben und aussen gedrückt wird.
Als Ergebnis wird die Faltung des Planenverdecks /1/ nach innen, in den Laderaum hinein, völlig kompensiert, so dass das Innenprofil des Wagens praktisch die fahrbaren Bögen kopiert.
Dabei wird der Wagennutzwert, das nutzbare Ladevolumen, erhöht und das Laden auch von voluminösen Ladungen wird vereinfacht. Weiterhin wird die Beschädigungsmöglichkeit der Plane durch scharfkantige oder spitze Ladungsteile reduziert. Die Betätigungskräfte des Planenverdecks mit der hier gezeigten Hub- Spreizeinrichtung sind nicht merkbar grösser als ohne. Diese neue Lösung ist sehr wirkungsvoll und weist geringe Ausrüstungs- oder Nachrüstungskosten auf.

### Industrielle Nutzbarkeit

Die Vorrichtung zum Anheben und Spreizen der Wagenplane mit verschiebbarer Planenabdeckung wird einerseits für die neuen Wagen mit verschiebbarer Planenabdeckung benutzt und andererseits ist es möglich, diese auch auf die bestehenden Wagen mit verschiebbarer Planenabdeckung anzuwenden.

## Patentansprüche

1. Vorrichtung zum Anheben und Spreizen von Wagenplanen bei Wagen mit verschiebbarer Planenabdeckung, bestehend aus fahrbaren Bögen /2/ (Spriegeln) und Planen /1/, die mit diesen verbunden sind, charakterisiert dadurch, dass unter der Plane /1/ flexible Stäbe angeordnet sind, die einerseits an den fahrbaren Bögen /2/ und an der Plane /1/ befestigt sind und andererseits fliegend gestaltet und nur an der Plane /1/ fixiert sind, die die Form der verschiebbaren Bögen /2/ kopieren bzw. einnehmen.

2. Vorrichtung zum Anheben und Spreizen von Wagenplanen mit verschiebbarer Planenabdeckung gemäss Anspruch Nr. 1, charakterisiert dadurch, dass die fliegend gestalteten flexiblen Stäbe /3/, die nur an der Plane /1/ befestigt sind, auf den Enden mit dem Druckstück /5/ ausgestattet sind.

3. Vorrichtung zum Anheben und Spreizen von Wagenplanen bei Wagen mit verschiebbarer Planenabdeckung gemäss Anspruch 1 und 2, **dadurch gekennzeichnet, dass** die an den fahrbaren Bögen 2 befestigten flexiblen Stäbe 3, abweichend von Anspruch 1, kreuzweise angeordnet sind.
